# EUROPÄISCHE PATENTSCHRIFT

(11) **EP 3 022 025 B1**
(45) Veröffentlichungstag und Bekanntmachung des Hinweises auf die Patenterteilung: **17.05.2017**
(21) Anmeldenummer: 14731266.4
(22) Anmeldetag: 18.06.2014
(51) Int. Cl.: B28B 11/04, C04B 30/02, E04C 1/41, C04B 111/28

(54) **VERFAHREN ZUR BEFÜLLUNG DER HOHLKAMMERN VON LOCHZIEGELN MIT EINER EIN HYDROPHOBIERUNGSMITTEL ENTHALTENDEN WÄRMEDÄMMSTOFFMISCHUNG**
METHOD FOR FILLING CAVITIES IN HOLLOW BRICKS WITH A THERMAL INSULATION MATERIAL MIXTURE CONTAINING A HYDROPHOBING AGENT
PROCÉDÉ DE REMPLISSAGE DES CAVITÉS DE BRIQUES CREUSES AVEC UNE COMPOSITION DE MATÉRIAU THERMO-ISOLANT CONTENANT UN AGENT HYDROPHOBISANT

(30) Priorität: 16.07.2013 DE 102013213886
(43) Veröffentlichungstag der Anmeldung: 25.05.2016
(73) Patentinhaber: Evonik Degussa GmbH, 45128 Essen (DE)
(72) Erfinder: KRATEL, Günter, 87471 Durach (DE); EYHORN, Thomas, 87452 Altusried (DE)
(86) Internationale Anmeldenummer: PCT/EP2014/062816
(87) Internationale Veröffentlichungsnummer: WO 2015/007450

(56) Entgegenhaltungen:
- EP-A2- 1 375 098
- WO-A1-2013/013714
- DE-A1-102004 027 920
- DE-A1-102007 020 716
- DE-A1-102009 009 457

## Beschreibung

Die Erfindung betrifft ein Verfahren zur Befüllung der Hohlkammern von Lochziegeln mit einer ein Hydrophobierungsmittel enthaltenden Wärmedämmstoffmischung.

Es ist bekannt die Hohlkammern von Lochziegeln Dämmmaterialien wie Styroporschaum oder Perlite-Schaum zu füllen. Dabei bringt man in der Regel Schüttungen in die Hohlkammern ein und schäumt anschließend mittels Wasserdampf auf. Die so erhaltenen gefüllten Lochziegel weisen eine gegenüber den ungefüllten Lochziegeln verbesserte Wärmedämmfähigkeit aus. Als nachteilig hat sich die nachlassende Wärmedämmfähigkeit durch die Aufnahme von Feuchtigkeit und/oder die Brennbarkeit der Dämmmaterialien erwiesen.

Dies Nachteile können weitestgehend vermieden und die Wärmedämmfähigkeit verbessert werden, indem man Dämmmaterialien einsetzt, die pyrogene Kieselsäure enthalten und die hydrophobe Eigenschaften aufweisen.

So ist in EP-A-2028329 ein Verfahren beschrieben, bei dem das pyrogene Kieselsäure enthaltende Dämmmaterial als Schüttgut mit einer sackartigen Umhüllung in die Hohlräume eingebracht wird.

In EP-A-1988228 ist ein Verfahren offenbart, bei dem man ein Dämmmaterial, welches pyrogen hergestellte Kieselsäure, Trübungsmittel und Fasern und ein Hydrophobierungsmittel enthält zu maßgenauen Platten verpresst und diese in die Hohlräume der Hochlochziegel einsetzt. Analog wird in DE-A-10 2009 054 566 und DE-A-10 2010 029 513 vorgegangen,

Die genannten Verfahren sind aufgrund der bei Hochlochziegel vorliegenden Maßtoleranzen nur sehr aufwändig durchzuführen.

Als Alternative wird in EP-A-1988228, DE-A-10 2009 054 566 und
DE-A-10 2010 029 513 vorgeschlagen, die mit dem Hydrophobierungsmittel versetzte Mischung in die Hohlkammern der Hochlochziegel einzufüllen und mittels Presshilfen direkt in den Hohlkammern zu verpressen. Es wurde jedoch gefunden, dass sich die mit dem Hydrophobierungsmittel versetzte Mischung nur unzureichend verpressen läßt.

DE-A-102007020716 offenbart ein Verfahren zur Befüllung der Hohlkammern von Lochziegeln mit einer Wärmedammstoffmischung. Das Verfahren zeichnet sich dadurch aus, dass man
i.) ein rieselfähiges Gemisch, enthaltend pulverförmige, pyrogene, hydrophile Kieselsaure, pulverförmiges Trübungsmittel, gegebenenfalls Fasern und 5- 65 Gew% feinteilige anorganische Zusatzstoffen mit einem flüssigen Organosilan versetzt, und
ii.) dieses rieselfähige Gemisch in die Locher der Hohlziegel füllt und unter Einwirkung von Pressstempeln in den Lochern verdichtet.

Es bestand daher die technische Aufgabe ein Verfahren bereitzustellen, welches das Verpressen eines eine pyrogene Kieselsäure enthaltenden Dämmmaterials in den Hohlkammern eines Hochlochziegels zuläßt.

Gegenstand der Erfindung ist ein Verfahren zur Befüllung der Hohlkammern von Lochziegeln mit einer Wärmedämmstoffmischung, bei dem man
a) ein Gemisch (1) das erhalten wird, indem man eine pulverförmige, pyrogene, hydrophile Kieselsäure, pulverförmiges Trübungsmittel und Fasern, bei Temperaturen von weniger als 30°C mit einem flüssigen Hydrophobierungsmittel versetzt, in eine obere Füllröhre (2) fördert,
b) nachfolgend den unteren Pressstempel (5) nach unten bewegt und so einen Teil der sich in der oberen Füllröhre (2) befindlichen Mischung durch die Hohlkammern des Lochziegels (4) in die untere Füllröhre (3) saugt, so dass
   sich die Mischung in die obere Füllröhre (2), die Hohlkammern des Lochziegels (4) und in die untere Füllröhre (3) verteilt,
c) nachfolgend durch beidseitiges Pressen der Pressstempel (5) und (6) die Mischung verdichtet,
d) wobei vor und während des Pressvorganges gasförmige und gegebenenfalls dampfförmige Stoffe über Filterplatten (7) an den Pressstempeln (5) und (6) entfernt wird und
e) wobei der Zeitraum zwischen der Zugabe des flüssigen Hydrophobierungsmittels und dem Abschluß des Pressvorganges 60 Minuten nicht übersteigt und
f) nachfolgend die in den Hohlkammern des Lochziegels (4) verpresste Mischung, bevorzugt bei einer Temperatur von 20 bis 80°C, nachreagieren läßt.

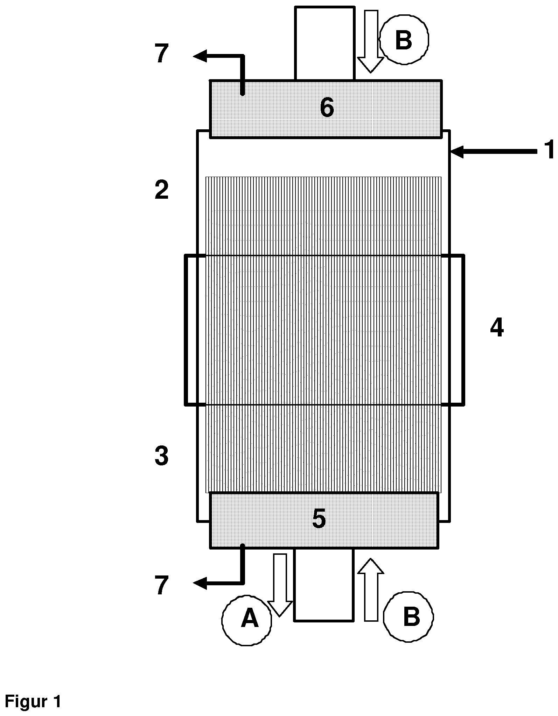

Die Nummerierung (1) - (7) bezieht sich auf Figur 1. A bedeutet die Bewegung des Pressstempels (5) nach unten, B das beidseitige Pressen der Pressstempel (5) und (6).

Pyrogene Kieselsäuren werden durch Flammenhydrolyse von Siliciumverbindungen, wie beispielsweise Chlorsilanen, hergestellt. Bei diesem Verfahren wird ein hydrolysierbares Silicium halogenid mit einer Flamme zur Reaktion gebracht, die durch Verbrennung von Wasserstoff und eines sauerstoffhaltigen Gases gebildet worden ist. Die Verbrennungsflamme stellt dabei Wasser für die Hydrolyse des Siliciumhalogenides und genügend Wärme zur Hydrolysereaktion zur Verfügung. Eine so hergestellte Kieselsäure wird als pyrogene Kieselsäure bezeichnet. Bei diesem Prozess werden zunächst Primärpartikel gebildet, die nahezu frei von inneren Poren sind. Diese Primärteilchen verschmelzen während des Prozesses über sogenannte "Sinterhälse" zu dreidimensionalen Aggregaten. Aufgrund dieser Struktur ist pyrogen hergestellte Kieselsäure ein ideales Dämmmaterial, da die Aggregatstruktur eine hinreichende mechanische Stabilität bewirkt, die Wärmeübertragung durch Festkörperleitfähigkeit über die "Sinterhälse" minimiert und eine ausreichend hohe Porosität erzeugt. Bei der eingesetzten pyrogenen Kieselsäure handelt es sich um eine hydrophile Kieselsäure, wie sie im geschilderten Verfahren erhalten wird. Diese Kieselsäure trägt auf ihrer Oberfläche Hydroxylgruppen in Form von Si-OH. Bei den pyrogenen hydrophilen Kieselsäuren beträgt die Silanolgruppendichte in der Regel 1,8 bis 2,5, wenn sie durch Reaktion des Siliciumdioxidpulvers mit LiAlH₄ nach der Methode von J. Mathias und G. Wannemacher (Journal of Colloid and Interface Science 125, 1988, 61) bestimmt wird. Im Unterschied zu einer hydrophoben Kieselsäure soll die Oberfläche der hydrophilen Kieselsäure nicht mit einem organischen oder anorganischen Hydrophobierungsmittel behandelt sein.

Im Rahmen der Erfindung bedeutet pyrogene Kieselsäure eine pulverförmige, pyrogene, hydrophile Kieselsäure.

Die pyrogene Kieselsäure kann auch in verdichteter Form, das heißt mit Stampfdichten bestimmt nach DIN EN ISO 787/11 von mehr als 80 g/l, in der Regel > 80 bis 150 g/l, eingesetzt werden. Typische Stampfdichten der nicht pyrogenen Kieselsäure betragen 30 bis 60 g/l. Bevorzugt kommen pyrogene Kieselsäuren mit einer BET-Oberfläche von 90 m²/g oder mehr, besonders bevorzugt von 150 bis 500 m²/g zum Einsatz.

Bei den im erfindungsgemäßen Verfahren eingesetzten Trübungsmitteln handelt es sich bevorzugt um Titanoxide, Zirkonoxide, Ilmenite, Eisentitanate, Eisenoxide, Zirkonsilikate, Siliciumcarbid, Manganoxide, Graphite und/oder Ruße, oder um Stoffgemische, welche mindestens einen der vorgenannten Bestandteile umfassen. Besonders bevorzugt handelt es sich um Siliciumcarbid, Titanoxide, Eisenoxide oder Ruße. Die Partikelgröße der Trübungsmittel liegt in der Regel zwischen 0,1 bis 25 µm. Bei Siliciumcarbid und Titanoxiden ist der mittlerer Partikeldurchmesser d₅₀ bevorzugt 1 bis 10 µm, besonders bevorzugt 2 bis 8 µm.

Zur mechanischen Verstärkung werden zusätzlich Fasern eingesetzt werden. Diese Fasern können anorganischen oder organischen Ursprungs sein. Beispiele einsetzbarer anorganischer Fasern sind Glaswolle, Steinwolle, Basalt-Fasern, Schlacken-Wolle und keramische Fasern, die aus Schmelzen von Aluminiumoxid und/oder Siliciumdioxid, sowie weiteren anorganischen Metalloxiden bestehen. Reine Siliciumdioxidfasern sind beispielsweise Silica-Fasern. Beispiele einsetzbarer organischer Fasern sind Cellulosefasern, Textilfasern oder Kunststofffasern. Der Durchmesser der Fasern beträgt bevorzugt 1 bis 30 µm, besonders bevorzugt 5 bis 15 µm, ganz besonders bevorzugt 6 bis 9 µm, und die Länge beträgt bevorzugt 1 bis 25 mm, besonders bevorzugt 3 bis 12 mm.

Das im erfindungsgemäßen Verfahren eingesetzte Gemisch (1) enthält bevorzugt 5 bis 96 Gew.%, besonders bevorzugt 50 bis 92 Gew.% pyrogene Kieselsäure; bevorzugt 3 bis 40 Gew.%, besonders bevorzugt 5 bis 20 Gew.% Trübungsmittel und bevorzugt 1 bis 20 Gew.%, besonders bevorzugt 2 bis 8 Gew.% Fasern.

Bei dem Hydrophobierungsmittel handelt es sich bevorzugt um ein Organosilan der Summenformel Rₙ-Si-X₄₋ₙ, RₙSiₙOₙ, mit n = 1-4; R = -H, -CH₃, -C₂H₅; X = -Cl, -Br; -OCH₃, -OC₂H₅, -OC₃H₈ und/oder Hexamethyldisilazan, (CH₃)₃SiNHSi(CH₃)₃. Besonders bevorzugt kann Hexamethyldisilazan eingesetzt werden, da das bei der Hydrophobierungsreaktion entstehende geringe Ammoniakgasvolumen die Entgasung während des Pressvorganges kaum beeinflußt. Der Anteil des Hydrophobierungsmittels beträgt bevorzugt 0,5 - 10 Gew.%, besonders bevorzugt 1 bis 6 Gew.%, jeweils bezogen auf das Gemisch (1).

Das Hydrophobierungsmittel wird in flüssiger Form, möglichst fein verteilt in das Gemisch (1) eingebracht. Dabei befindet sich das Gemisch (1) bevorzugt in Bewegung, beispielsweise durch Rühren. Das Hydrophobierungsmittel kann durch eine druckluftfreie Zerstäubung oder durch in das Gemisch (1) ragende Kanülen eingebracht werden.

Es ist darauf zu achten, dass das Hydrophobierungmittel rasch in das Gemisch (1) eingearbeitet wird. Bevorzugt wird dieser Vorgang in einem Zeitraum von nicht mehr als 5 min, besonders bevorzugt von 10 s bis 3 min und ganz besonders von 30 s bis 90 s durchgeführt.

Der Prozessschritt der Hydrophobierung ist vom Wassergehalt der pyrogenen Kieselsäure abhängig. Der Wassergehalt sollte nicht mehr als 1 Gew.-%, bezogen auf das Gemisch (1), betragen. Gegebenenfalls kann das Gemisch (1) und/oder der Lochziegel zur Verringerung des Wassergehaltes temperiert dem Prozess zugeführt werden.

Als Lochziegel (4) können sowohl gebrannte Ziegel als auch kaltgeformte Steine, beispielsweise zementgebundene Bimssteine, zur Anwendung kommen.

Das erfindungsgemäße Verfahren weist einen Reaktionsschritt auf, bei dem man die verpresste Mischung in den Hohlkammern des Lochziegels (4) nachreagieren läßt. Die Nachreaktion dient im wesentlichen dazu die Hydrophobierung vollständig abzuschließen. Eine zu schnelle, d. h. eine bei relativ hohen Temperaturen vorgenommene Nachreaktion kann dazu führen, dass die gasförmigen Reaktionsprodukte zu heftig austreten und dabei das Gefüge des Dämmstoffes zerstören. Daher hat es sich als vorteilhaft verwiesen, die Nachreaktion so auszuführen, dass man ausgehend von 20-30°C kontinuierlich über einen Zeitraum von 20-90 min, besonders bevorzugt 30-60 min auf eine Temperatur von 50-100°C erwärmt, und gegebenenfalls bei der höchsten Temperatur eine Haltezeit von 10-20 min beibehält.

Die verpresste Mischung kann mitunter einen sogenannten "spring-back"-Effekt aufweisen, d. h. sie kann sich nach dem Pressen wieder etwas ausdehnen. Dies führt einerseits zur notwendigen Verankerung in der Hohlkammer des Bausteines, andererseits kann ein Teil der verpressten Mischung über die die Lochziegeloberfläche hinausragen, wenn die Verpressung bündig mit der Oberfläche stattfindet. Dies kann verhindert werden, wenn geeignet profilierte Pressstempel wenigstens 2 mm, bevorzugt 2 - 5 mm in die die Mischung aufweisende Kammer eintauchen.

Die mittlere Dichte der verpressten Mischung beträgt in der Regel 100 bis 150 kg/m³.

### Beispiel

Hochlochziegel: MZ 8 mit 12 Hohlkammern, Ziegelverbund "Mein Ziegelhaus".

Gemisch (1): Es wird ein Gemisch bestehend aus 83 Gew.-% AEROSIL® 200, Evonik, 16 Gew.-% Siliciumcarbid und 1 Gew.-% Fasern eingesetzt.

Als Hydrophobierungsmittel dient Hexamethyldisilazan, 4 Gew.-% bezogen auf das Gemisch (1).

Der Mischvorgang wird in einem geschlossenen Behälter unter Verwendung eines Rühraggregates bei einer Umdrehungsgeschwindigkeit von 1000 - 1500 UpM durchgeführt. Die Rührzeit beträgt ca. 30 - 60 s, in dieser Zeit wird in den ersten 30 - 45 s das Hydrophobierungsmittel eingespritzt und anschließend noch ca. 15 s weiter gerührt. Die Temperatur beträgt ca. 20°C an. Die Mischung wird in die obere Füllröhre (2) gefördert. Der untere Pressstempel (5) fährt nach unten (A) und saugt die Mischung durch die Hohlkammer des Lochziegels (4) in die untere Füllröhre (3). Die Verdichtung der Mischung erfolgt beim Pressen gleichzeitig und beidseitig 2 - 3 mm in den Lochziegel hinein. Unmittelbar vor der Pressphase und während des Pressvorgangs wird die überschüssige Luft über Filterplatten durch die Pressstempel abgesaugt (7).

Der Pressvorgang ist innerhalb ca. 10 min beendet. Nachfolgend wird über einen Zeitraum von 50 min die Temperatur auf 60°C gesteigert und dort für 10 min belassen. Nach ca. 30 - 45 min bei einer Temperatur von ca. 60°C ist die Reaktion im Lochziegel abgeschlossen, die Wärmedämmstoffmischung durchgehend hydrophobiert und die Entgasung weitgehend erfolgt.

Beim erhaltenen Lochziegel ist keine Hydrophobierung der Bausteinoberflächen festzustellen. Der Ziegelscherben ist auch in unmittelbarer Nähe der hydrophobierten Dämmstoffmischung mit Wasser benetzbar.

## Patentansprüche

1. Verfahren zur Befüllung der Hohlkammern von Lochziegeln mit einer Wärmedämmstoffmischung, **dadurch gekennzeichnet, dass** man
a) ein Gemisch (1) das erhalten wird, indem man eine pulverförmige, pyrogene, hydrophile Kieselsäure, pulverförmiges Trübungsmittel und Fasern, bei Temperaturen von weniger als 30°C mit einem flüssigen Hydrophobierungsmittel versetzt, in eine obere Füllröhre (2) fördert,
b) nachfolgend den unteren Pressstempel (5) nach unten bewegt und so einen Teil der sich in der oberen Füllröhre (2) befindlichen Mischung durch die Hohlkammern des Lochziegels (4) in die untere Füllröhre (3) saugt, so dass sich die Mischung in die obere Füllröhre (2), die Hohlkammern des Lochziegels (4) und in die untere Füllröhre (3) verteilt.
c) nachfolgend durch beidseitiges Pressen der Pressstempel (5) und (6) die Mischung verdichtet,
d) wobei vor und während des Pressvorganges gasförmige und gegebenenfalls dampfförmige Stoffe über Filterplatten (7) an den Pressstempeln (5) und (6) entfernt wird und
e) wobei der Zeitraum zwischen der Zugabe des flüssigen Hydrophobierungsmittels und dem Abschluß des Pressvorganges 60 Minuten nicht übersteigt und
f) nachfolgend die in den Hohlkammern des Lochziegels (4) verpresste Mischung, bevorzugt bei einer Temperatur von 20 bis 100°C, nachreagieren läßt.

2. Verfahren nach Anspruch 1, **dadurch gekennzeichnet, dass** das Gemisch (1) 5 bis 96 Gew.% pyrogene, hydrophile Kieselsäure, 3 bis 40 Gew.% Trübungsmittel und 1 bis 20 Gew.% Fasern enthält.

3. Verfahren nach den Ansprüchen 1 oder 2, **dadurch gekennzeichnet, dass** das Hydrophobierungsmittel ein Organosilan der Summenformel Rₙ-Si-X₄₋ₙ, RₙSiₙOₙ mit n = 1-4; R = -H, -CH₃, -C₂H₅; X = -Cl, -Br; -OCH₃, -OC₂H₅, -OC₃H₈ und/oder (CH₃)₃SiNHSi(CH₃)₃. ist,

4. Verfahren nach den Ansprüchen 1 bis 3, **dadurch gekennzeichnet, dass** der Anteil des Hydrophobierungsmittels 0,5 - 10 Gew.%, bezogen auf das Gemisch (1), beträgt.

5. Verfahren nach den Ansprüchen 1 bis 4, **dadurch gekennzeichnet, dass** der Wassergehalt des Gemisches (1) und/oder des Lochziegels (4) jeweils höchstens 1 Gew.-% ist.

6. Verfahren nach den Ansprüchen 1 bis 5, **dadurch gekennzeichnet, dass** man die verpresste Mischung in den Hohlkammern des Lochziegels (4) so nachreagieren läßt, dass man diese ausgehend von 20-30°C kontinuierlich über einen Zeitraum von 20-90 min auf eine Temperatur von 50-100°C erwärmt.

7. Verfahren nach den Ansprüchen 1 bis 6, **dadurch gekennzeichnet, dass** geeignet profilierte Pressstempel wenigstens 2 mm in die die Mischung aufweisende Kammer eintauchen.

## Claims

1. Method for filling the hollow chambers of perforated bricks with a thermal insulation material mixture, **characterized in that**
a) a mixture (1), obtained by admixing a pulverulent, fumed, hydrophilic silica, pulverulent opacifier and fibres with a liquid hydrophobizing agent at temperatures of less than 30°C, is conveyed into an upper filling pipe (2),
b) subsequently the lower pressing ram (5) is moved downwards, and thus a part of the mixture located in the upper filling pipe (2) is drawn through the hollow chambers of the perforated brick (4) into the lower filling pipe (3), and so the mixture is distributed into the upper filling pipe (2), the hollow chambers of the perforated brick (4), and into the lower filling pipe (3),
c) subsequently the mixture is compacted by bilateral pressing of the pressing rams (5) and (6),
d) where gaseous and any vaporous substances are removed, before and during the pressing operation, via filter plates (7) on the pressing rams (5) and (6), and
e) where the time period between the addition of the liquid hydrophobizing agent and the conclusion of the pressing operation does not exceed 60 minutes, and
f) subsequently the mixture pressed into the hollow chambers of the perforated brick (4) is left to continue reacting, preferably at a temperature of 20 to 100°C.

2. Method according to Claim 1, **characterized in that** the mixture (1) comprises 5 to 96 wt% of fumed, hydrophilic silica, 3 to 40 wt% of opacifier, and 1 to 20 wt% of fibres.

3. Method according to Claims 1 or 2, **characterized in that**
the hydrophobizing agent is an organosilane of the empirical formula
Rₙ-Si-X₄₋ₙ, RₙSiₙOₙ
where n = 1-4; R = -H, -CH₃, -C₂H₅; X = -Cl, -Br; -OCH₃,
-OC₂H₅, -OC₃H₈ and/or (CH₃)₃SiNHSi(CH₃)₃.

4. Method according to Claims 1 to 3, **characterized in that**
the fraction of the hydrophobizing agent is 0.5 - 10 wt%, based on the mixture (1).

5. Method according to Claims 1 to 4, **characterized in that**
the water content of the mixture (1) and/or of the perforated brick (4) is in each case not more than 1 wt%.

6. Method according to Claims 1 to 5, **characterized in that**
the pressed mixture in the hollow chambers of the perforated brick (4) is left to continue reacting in such a way that, starting from 20-30°C, the mixture is heated continuously over a time period of 20-90 minutes to a temperature of 50-100°C.

7. Method according to Claims 1 to 6, **characterized in that**
suitably profiled pressing rams project at least 2 mm into the chamber containing the mixture.

## Revendications

1. Procédé pour le remplissage des cavités de briques creuses par un mélange de matériau thermo-isolant, **caractérisé en ce que**
a) on transporte un mélange (1), obtenu **en ce qu'**on ajoute, à une silice sous forme de poudre, pyrogène, hydrophile, à un opacifiant et à des fibres, à des températures inférieures à 30°C, un agent d'hydrofugation liquide, dans un tuyau de remplissage (2) supérieur,
b) on déplace ensuite le piston de presse (5) inférieur vers le bas et aspire ainsi une partie du mélange se trouvant dans le tuyau de remplissage (2) supérieur à travers les cavités de la brique creuse (4) dans le tuyau de remplissage (3) inférieur, de manière telle que le mélange se répartit dans le tuyau de remplissage (2) supérieur, les cavités de la brique creuse (4) et le tuyau de remplissage (3) inférieur,
c) on compacte ensuite le mélange par pressage des deux côtés par les pistons de presse (5) et (6),
d) des substances gazeuses et le cas échéant sous forme de vapeur étant éliminées, avant et pendant le processus de pressage, via des plaques de filtre (7) au niveau des pistons de pression (5) et (6) et
e) le laps de temps entre l'addition de l'agent d'hydrofugation liquide et la fin du processus de pressage ne dépassant pas 60 minutes et
f) on laisse ensuite postréagir le mélange pressé dans les cavités de la brique creuse (4), de préférence à une température de 20 à 100°C.

2. Procédé selon la revendication 1, **caractérisé en ce que** le mélange (1) contient 5 à 96% en poids de silice pyrogène, hydrophile, 3 à 40% en poids d'opacifiant et 1 à 20% en poids de fibres.

3. Procédé selon les revendications 1 ou 2, **caractérisé en ce que** l'agent d'hydrofugation est un organosilane de formule brute Rₙ-Si-X₄₋ₙ, RₙSiₙOₙ avec n = 1-4 ; R = -H, -CH₃, -C₂H₅ ; X = -Cl, -Br ; -OCH₃, -OC₂H₅, -OC₃H₈ et/ou (CH₃)₃SiNHSi(CH₃)₃.

4. Procédé selon les revendications 1 à 3, **caractérisé en ce que** la proportion d'agent d'hydrofugation est de 0,5-10% en poids, par rapport au mélange (1).

5. Procédé selon les revendications 1 à 4, **caractérisé en ce que** la teneur en eau du mélange (1) et/ou de la brique creuse (4) est à chaque fois d'au plus 1% en poids.

6. Procédé selon les revendications 1 à 5, **caractérisé en ce qu'**on laisse postréagir le mélange pressé dans les cavités de la brique creuse (4) de manière telle qu'on le réchauffe, partant de 20-30°C, en continu, sur un laps de temps de 20-90 minutes, à une température de 50-100°C.

7. Procédé selon les revendications 1 à 6, **caractérisé en ce que** des pistons de presse profilés de manière appropriée plongent d'au moins 2 mm dans la cavité présentant le mélange.
